Europäisches Patentamt

European Patent Office

Office européen des brevets

(19)

(11) Veröffentlichungsnummer : **0 103 673**
**B1**

(12) **EUROPÄISCHE PATENTSCHRIFT**

(45) Veröffentlichungstag der Patentschrift :
01.02.89

(21) Anmeldenummer : 83104614.9

(22) Anmeldetag : 11.05.83

(51) Int. Cl.⁴ : **G 02 B  6/30**, G 02 B  6/28,
G 02 B  6/12

(54) **Integrierte, mikro-optische Vorrichtung.**

(30) Priorität : 25.08.82 DE 3231492

(43) Veröffentlichungstag der Anmeldung :
28.03.84 Patentblatt 84/13

(45) Bekanntmachung des Hinweises auf die Patenterteilung : 01.02.89 Patentblatt 89/05

(84) Benannte Vertragsstaaten :
**BE DE FR GB IT NL**

(56) Entgegenhaltungen :
EP--A-- 0 006 052
EP--A-- 0 042 514
JP--A--54 056 403
US--A-- 3 814 498
PATENTS ABSTRACTS OF JAPAN, Band 6, Nr. 22 (P-
101) [900], 9. Februar 1982; & JP - A - 56 144 407
(RITSUO HASUMI) 10-11-1981
INSTITUTE OF ELECTRONICS AND COMMUNICA-
TION ENGINEERS OF JAPAN. INTERNATIONAL
CONFERENCE ON INTEGRATED OPTICS AND OPTI-
CAL FIBER COMMUNICATION, TECHNICAL DIGEST,
18.-20. Juli 1977, Seiten 193-196, Tokyo, JP; C.M.
VERBER et al.: "An integrated optics processor for
multichannel data"
PATENTS ABSTRACTS OF JAPAN, Band 3, Nr. 60 (E-
112), 23. Mai 1979, Seite 71 E 112; & JP - A - 54 38 143
(NIPPON DENKI K.K.) 22-03-1979

(73) Patentinhaber : **ANT Nachrichtentechnik GmbH**
**Gerberstrasse 33**
**D-7150 Backnang (DE)**

(72) Erfinder : **Unger, Hans-Georg, Prof.-Dr.-Ing.**
**Wöhler Strasse 10**
**D-3300 Braunschweig (DE)**

EP 0 103 673 B1

## Beschreibung

Die Erfindung betrifft eine integrierte mikrooptische Vorrichtung mit einer einwelligen Faser, einem Laser, einer Fotodiode und einem Substrat, auf der ein Filmwellenleiter aufgebracht ist, der an die Faser, den Laser und die Fotodiode angekoppelt ist.

Sowohl die US-A-3 814 498 als auch die JP-A-5 456 463 beschreiben einen wellenlängenselektiven Strahlteiler, der in Form einer Gitterstruktur in einem Substrat integriert ist, das mit einem Lichtwellen leitenden Film beschichtet ist.

Bei der eingangs beschriebenen Vorrichtung hat sich die Erfindung die Aufgabe gestellt, diese so auszubilden, daß sie in sehr einfacher Weise monolithisch integriert werden kann und daß Sende- und Anschlußsignal leicht voneinander trennbar sind bei gleichzeitiger Anpassung der Laserausgangsstrahlung an den Fasereingang.

Erfindungsgemäß wird dies durch die im Anspruch 1 aufgezählten Merkmale ermöglicht.

Vorteilhafte Weiterbildungen der Erfindung können gemäß den in den Unteransprüchen aufgeführten Merkmalen realisiert werden.

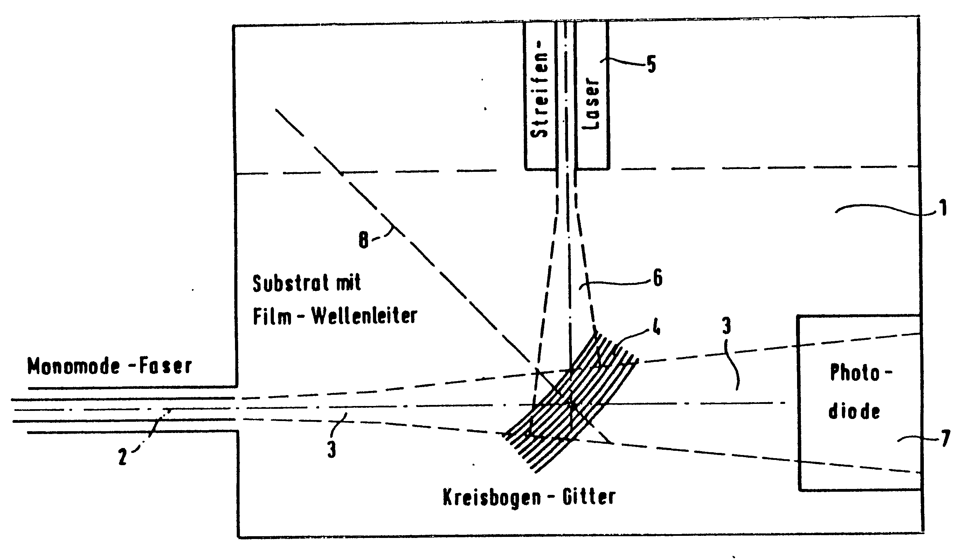

Anhand eines schematisch dargestellten Ausführungsbeispiels gemäß der Figur soll im folgenden die Erfindung näher erläutert werden.

Die Vorrichtung besteht aus einem gemeinsamen Substrat, auf dem ein einwelliger Film-Wellenleiter aufgebracht ist. In der Figur auf der linken Seite ist die einwellige Faser (Monomode-Faser) 2 an das Substrat 1 angekoppelt. Diese Faser regt mit ihrer Grundwelle in der Grundwelle des Film-Wellenleiters einen gaußschen Strahlengang 3 an. Von seiner Strahltaille am Ort der Faseranregung erweitert sich dieser Strahl allmählich und nähert sich dabei asymptotisch einem bestimmten und konstanten Öffnungswinkel in seiner Strahlungscharakteristik. In seinem Strahlweg liegt ein Beugungsgitter 4. Dieses Beugungsgitters 4 ist aus kreisbogenförmigen Linien realisiert und unter einem Winkel von 45° zum Strahlengang 3 angeordnet. Der Linienabstand des Beugungsgitters ist so gewählt, daß das Gitter zwar die aus dem in der Figur oben dargestellten Halbleiterstreifenlaser 5 kommende Strahlengang 6 im in die Faser 2 umlenkt, die aus der Faser mit anderer Wellenlänge ausgehende Strahlung jedoch durchläßt. Sie wandert deshalb in den Film-Wellenleiter weiter und läuft schließlich in die integrierte Fotodiode 7. Dort wird sie absorbiert und erzeugt einen entsprechenden Fotosignalstrom. Die Laserschwingung aus dem Streifenlaser 5 in ihrer transversalen Grundordnung erzeugt ebenfalls einen gaußschen Strahl 6 in der Film-Grundwelle. Der Filmwellenleiter ist nicht auf die *im* Ausführungsbeispiel dargestellten gestrichelten Bereiche beschränkt, sondern kann sich gegebenenfalls über die ganze Substratoberfläche ausdehnen. Der Abstand der Linien im Beugungsgitter 4 ist auf die Wellenlänge der Filmwelle aus dem Laser 5 so abgestimmt, daß es für die Umlenkung in Richtung auf die Faser 2 hin konstruktive Interferenz für die Beiträge für die einzelnen Gitterlinien gibt. Die Laserstrahlung wird somit ganz umgelenkt und in die Grundwelle der angeschlossenen Faser 2 eingestrahlt. Das Beugungsgitter 4 ist ferner so gekrümmt, daß die Phasenfronten der in der Film-Grundwelle als gaußscher Strahl ankommenden Laserstrahlung so transformiert werden, daß nach Umlenkung ein gaußscher Strahl in Richtung auf die Faser weiterläuft, der seine Strahltaille gerade am Fasereingang hat und auch mit seiner Taillenweite an die Grundwelle der Faser angepaßt ist.

Das Beugungsgitter 4 zum selektiven Umlenken der Laserstrahlung muß nicht unbedingt unter 45° zwischen den Strahlengängen 3 und 6 angeordnet sein, vielmehr sind auch andere Winkel realisierbar. Vorteilhafterweise wird man den Streifenlaser 5 nicht als separaten Baustein an den Sende-Empfangs-Duplexer anschließen, sondern direkt auf dem gleichen Substrat anordnen.

Die aufgezeigte Vorrichtung kann somit in einfacher Weise als ein einheitliches monolithisch integriertes Bauteil hergestellt werden.

## Patentansprüche

1. Integrierte mikro-optische Vorrichtung mit einer einwelligen Faser, einem Laser, einer Fotodiode und einem Substrat, auf der ein Filmwellenleiter aufgebracht ist, der an die Faser, den Laser und die Fotodiode angekoppelt ist, dadurch gekennzeichnet, daß ein Strahlengang (3) im Filmwellenleiter direkt von der an ihn angekoppelten Faser (2) zu einer Fotodiode (7) führt, daß in diesem Strahlengang (3) ein kreisbogenförmiges Beugungsgitter (4) angeordnet ist und daß ein anderer vom Laser (5) ausgehender Strahlengang (6) direkt zu dem Beugungsgitter (4) führt, wobei dieses Beugungsgitter (4) ferner so dimensioniert ist, daß es die von der Faser (2) kommende Strahlung durchläßt, die vom Laser (5) kommende Strahlung jedoch in Richtung zur Faser (2) hin umlenkt und daß dieses Beugungsgitter (4) außerdem eine derartige Krümmung hat, daß die Laserausgangsstrahlung an den Fasereingang angepaßt wird.

2. Vorrichtung nach Anspruch 1, dadurch gekennzeichnet, daß das Beugungsgitter (4) unter 45 Grad zwischen den beiden Strahlengängen (3) und (6) angeordnet ist.

3. Vorrichtung nach einem der vorhergehenden Ansprüche, dadurch gekennzeichnet, daß als Laser (5) ein direkt auf dem Substrat angeordneter Streifen-Laser dient.

4. Vorrichtung nach einem der vorhergehenden Ansprüche, dadurch gekennzeichnet, daß über die Faser (2) im Film-Wellenleiter (3) dessen Grundwelle angeregt wird.

5. Vorrichtung nach einem der vorhergehenden Ansprüche, dadurch gekennzeichnet, daß die Laserschwingung in ihrer transversalen Grundordnung den Film-Wellenleiter (6) in dessen Grundwelle anregt.

## Claims

1. Integrated micro-optical device including a mono-mode fiber, a laser, a photodiode and a substrate to which a film waveguide is applied which is coupled to the fiber, the laser and the photodiode, characterized in that a beam path (3) in the film waveguide leads directly from the fiber (2) coupled thereto to a photodiode (7); an arcuate refraction grating (4) is disposed in said beam path (3); and another beam path (6) emanating from the laser (5) leads directly to the refraction grating (4); with this refraction grating (4) being dimensioned so that it transmits radiation coming from the fiber (2) but deflects the radiation coming from the laser (5) in the direction toward the fiber (2) and, additionally, this refraction grating (4) has such a curvature that the laser output radiation is matched to the fiber input.

2. Device according to claim 1, characterized in that the refraction grating (4) is disposed at an angle of 45° between the two beam paths (3) and (6).

3. Device according to one of the preceding claims, characterized in that a strip laser disposed directly on the substrate serves as the laser (5).

4. Device according to one of the preceding claims, characterized in that the fundamental mode of the film waveguide (3) is excited therein by the fiber (2).

5. Device according to one of the preceding claims, characterized in that the laser oscillation, in its transversal fundamental order, excites the fundamental mode of the film waveguide (6).

## Revendications

1. Dispositif micro-optique intégré comprenant une fibre mono-onde, un laser, une photodiode et un substrat sur lequel est déposé un guide d'onde film qui est couplé à la fibre, au laser et à la photodiode, caractérisé en ce qu'un trajet de rayonnement (3) mène directement, dans le guide onde film, de la fibre (2) accouplée à ce guide d'onde à une photodiode 7, en ce que dans ce trajet de rayonnement est intercalé un réseau de diffraction (4) incurvé en arc de cercle et en ce qu'un autre trajet de faisceau (6) qui part du laser (5) mène directement au réseau de diffraction (4), ce réseau de diffraction (4) étant par ailleurs dimensionné de manière à laisser passer le rayonnement provenant de la fibre (2), mais à dévier le rayonnement provenant du laser (5) vers la fibre (2) et ce réseau de diffraction (4) possédant par ailleurs une courbure telle que le rayonnement de sortie du laser soit adapté à l'entrée de la fibre.

2. Dispositif selon la revendication 1, caractérisé en ce que le réseau de diffraction (4) est incliné de 45° entre les deux trajets de rayonnement (3 et 6).

3. Dispositif selon l'une des revendications précédentes, caractérisé en ce qu'on utilise comme laser (5) un laser à bande directement disposé sur le substrat.

4. Dispositif selon l'une des revendications précédentes, caractérisé en ce que, par l'intermédiaire de la fibre (2), on excite dans le guide d'onde film (3) l'onde fondamentale de celui-ci.

5. Dispositif selon l'une des revendications précédentes, caractérisé en ce que l'oscillation laser excite, dans son ordre fondamental transversal, le guide d'onde film (6) dans l'onde fondamentale de celui-ci.

Monomode-Faser

Substrat mit
Film - Wellenleiter

Laser

Streifen-

Photodiode

Kreisbogen - Gitter